(19)

Europäisches
Patentamt
European
Patent Office
Office européen
des brevets

(11) EP 4 778 698 A1

(12) **EUROPEAN PATENT APPLICATION**

(43) Date of publication:
22.07.2026 Bulletin 2026/30

(21) Application number: 25224659.0

(22) Date of filing: 17.12.2025

(51) International Patent Classification (IPC):
**B29C 55/00** (2006.01) B29C 55/12 (2006.01)

(52) Cooperative Patent Classification (CPC):
**B29C 55/005;** B29C 55/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 30.12.2024 KR 20240201278

(71) Applicant: SK IE Technology Co., Ltd.
Seoul 03161 (KR)

(72) Inventors:
• LEE, Sin Ho
03188 Seoul (KR)

• KO, Byoung Sun
03188 Seoul (KR)
• PARK, Hye Jin
03188 Seoul (KR)
• CHOI, Yu Mi
03188 Seoul (KR)
• HAN, Kyu Seok
03188 Seoul (KR)

(74) Representative: **Prüfer & Partner mbB**
**Patentanwälte · Rechtsanwälte**
**Sohnckestraße 12**
**81479 München (DE)**

(54) **POROUS POLYMER FILM, AND SYSTEM AND METHOD FOR MANUFACTURING SAID POROUS POLYMER FILM**

(57) A method for manufacturing a porous polymer film according to embodiments of the present disclosure may include: stretching a polymer sheet containing oil to prepare a preliminary porous polymer film; irradiating the preliminary porous polymer film with electron beams to produce a crosslinked porous polymer film; extracting oil from the crosslinked porous polymer film; and heat setting the crosslinked porous polymer film.

[FIG. 1]

```
┌─────────────────────────────────────────────────┐
│  Stretching of polymer sheet to prepare a       │ ~S10
│  preliminary porous polymer film                │
└─────────────────────────────────────────────────┘
                      │
                      ▼
┌─────────────────────────────────────────────────┐
│  Irradiating the preliminary porous polymer     │
│  film with electron beams to prepare a          │ ~S20
│  crosslinked porous polymer film                │
└─────────────────────────────────────────────────┘
                      │
                      ▼
┌─────────────────────────────────────────────────┐
│  Extracting oil from the crosslinked porous     │ ~S30
│  polymer film                                   │
└─────────────────────────────────────────────────┘
                      │
                      ▼
┌─────────────────────────────────────────────────┐
│  Heat-setting the crosslinked porous polymer    │ ~S40
│  film                                           │
└─────────────────────────────────────────────────┘
```

EP 4 778 698 A1

**Description**

1. Field of the Invention

The present disclosure relates to a porous polymer film, and further to a method and a system for manufacturing said porous polymer film as well as a use thereof.

2. Description of the Related Art

Porous polymer films are used in various fields. For example, porous polymer films may be used in the field of electronic devices, such as battery separators, electrolytic capacitor separators, and electronic device insulators; in the field of biotechnology, such as membranes for artificial lungs, plasma purification membranes, and respirable medical clothing; in filters for separating fine organic matter and viruses from water, separators for gas mixtures and filters for air purifiers.

Porous polymer films can be manufactured using various methods. For example, a low-crosslinked porous polymer film may be further crosslinked to a desired degree and used as a porous polymer film.

Conventionally, porous polymer films are manufactured by conveying porous polymer films in a roll-to-roll process and irradiating them with electron beams while traveling along the path to complete curing.

However, this method failed to produce high-quality porous polymer films at a rapid rate, and the development of equipment to increase both the production rate and quality of porous polymer films is required.

SUMMARY OF THE INVENTION

An object of the present disclosure is to provide a method for manufacturing a porous polymer film having improved process efficiency, including enhanced production speed, improved mechanical properties at high temperatures, and improved film quality through simplified equipment arrangement..

A method for manufacturing a porous polymer film of the present disclosure includes: stretching a polymer sheet containing oil to prepare a preliminary porous polymer film; irradiating the preliminary porous polymer film with electron beams to produce a crosslinked porous polymer film; extracting oil from the crosslinked porous polymer film; and heat setting the crosslinked porous polymer film.

In one embodiment, the acceleration voltage of the electron beam may be 0.2 MeV to 2.5 MeV.

In one embodiment, the cumulative irradiation dose of the electron beam for the preliminary porous polymer film may be 25 kGy to 200 kGy, or preferably 50 kGy to 200 kGy, or more preferably 50 kGy to 150 kGy.

In one embodiment, the polymer sheet may be manufactured by mixing the oil and the polymer resin to prepare a melt, and extruding the melt into a sheet shape.

In one embodiment, the polymer sheet may contain the oil in an amount of 60% by weight to 90% by weight based on the total weight thereof.

In one embodiment, the stretching may be performed at a temperature of 100°C to 200°C and at a ratio of 4 to 400 times.

In one embodiment, the heat setting may be performed at a temperature of 100°C to 200°C, preferably at a temperature of 110°C to 130°C.

In one embodiment, the method may further include heat treating the crosslinked porous polymer film after the electron beam irradiation step and before the oil extraction step.

In one embodiment, the heat treatment may be performed at a temperature of 50°C to 150°C for more than 1 minute and less than 10 minutes.

In one embodiment, a porous polymer film having a high load melt index (HLMI) of 0.5 g/10 min or less, as measured under conditions of a temperature of 190°C and a load of 21.6 kg according to ASTM D1238, may be manufactured.

In one embodiment, a porous polymer film having a high-temperature strain increase rate (SR) of 6 or less, as defined by Equation 1 below, may be manufactured.

[Equation 1]

$$\text{High-temperature strain increase rate (SR)} = \triangle\varepsilon \, / \, \triangle\text{T}$$

In Equation 1, $\triangle\varepsilon$ denotes the strain change in the temperature range of 155°C to 170°C in a temperature-strain graph obtained by measuring the strain of the porous polymer film while heating from room temperature at a heating rate of 5°C/min under a load of 0.02 N using a thermomechanical analysis (TMA) method, and $\triangle T$ denotes the temperature change.

A system for manufacturing a porous polymer film of the present disclosure comprises a stretching unit configured to stretch a polymer sheet containing oil to prepare a preliminary porous polymer film; an electron beam irradiation unit configured to irradiate the preliminary porous polymer film with electron beams to produce a crosslinked porous polymer film; an oil extraction unit configured to extract oil from the crosslinked porous polymer film; and a heat-setting unit configured to heat the crosslinked porous polymer film from which the oil has been extracted to fix its structure, wherein the system further comprises a plurality of conveying units sequentially connecting the stretching unit, the electron beam irradiation unit, the oil extraction unit, and the heat-setting unit, and wherein a conveying direction of the conveying units is a direction in which the film travels from the stretching unit to the heat-setting unit.

In one embodiment, the conveying units may convey each film in-line.

In one embodiment, the system may further comprise an extrusion unit configured to extrude a melt containing a polymer resin and oil to prepare a polymer sheet, and the extrusion unit is disposed upstream of the stretching unit.

A porous polymer film of the present disclosure has a high load melt index (HLMI) of 0.5 g/10 min or less, as measured under conditions of a temperature of 190°C and a load of 21.6 kg according to ASTM D1238, and a high-temperature strain increase rate (SR) of 6 or less, as defined by Equation 1 below:

[Equation 1]

$$\text{High-temperature strain increase rate (SR)} = \triangle \varepsilon \ / \ \triangle T$$

in Equation 1, $\triangle \varepsilon$ denotes the strain change in the temperature range of 155°C to 170°C in a temperature-strain graph obtained by measuring the strain of the porous polymer film while heating from room temperature at a heating rate of 5°C/min under a load of 0.02 N using a thermomechanical analysis (TMA) method, and $\triangle T$ denotes the temperature change.

In an embodiment, the porous polymer film may comprise one or more selected from the group of polyethylene, polypropylene, polymethylpentene, polyesters, polycarbonate, styrene resins, fluorine resins, and vinyl chloride resins, wherein at least a part of the porous polymer film is provided as a cured product crosslinked by an electron beam irradiation. Optionally, a gel content of the porous polymer film may be 90% or more.

In a general aspect, electron beam irradiation may be used for curing and crosslinking a preliminary porous polymer film that contains an oil.

In another general aspect, the porous polymer film may be used for purifying chemicals used or required for secondary battery separators and semiconductor processes, for hemodialysis, artificial lung membranes, plasma purification membranes, and respirable medical clothing serving as artificial kidneys, for isolating pathogenic bacteria in water and wastewater treatment plants and removing salt from seawater, and/or for purifying chemicals or organic solvents and separating gases from petrochemical processes.

The method and the system for manufacturing a porous polymer film according to the present disclosure may provide a porous polymer film having enhanced mechanical properties at high temperatures.

The method and the system for manufacturing a porous polymer film according to the present disclosure may increase the production rate of the porous polymer film.

The method and the system for manufacturing a porous polymer film according to the present disclosure may improve the quality of the porous polymer film through a simple change in equipment placement.

The porous polymer film according to the present disclosure may have enhanced mechanical properties at high temperatures.

BRIEF DESCRIPTION OF THE DRAWINGS

The above and other objects, features and advantages of the present disclosure will be more clearly understood from the following detailed description taken in conjunction with the accompanying drawings, in which:

FIG. 1 is a flowchart of a method for manufacturing a porous polymer film according to embodiments of the present disclosure; and

FIG. 2 is a schematic view illustrating a system for manufacturing a porous polymer film according to an embodiment.

DETAILED DESCRIPTION OF THE INVENTION

Hereinafter, exemplary embodiments of the present disclosure will be described in detail with reference to the accompanying drawings.

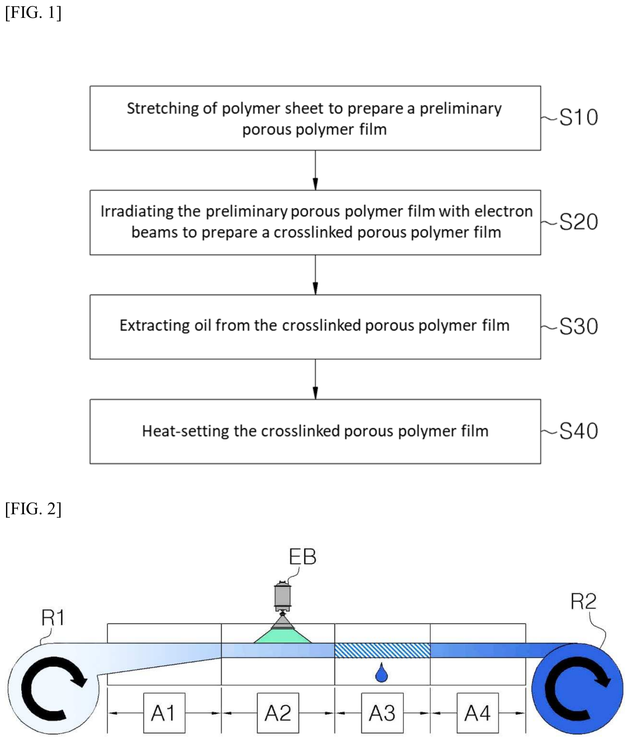

FIG. 1 is a flowchart of a method for manufacturing a porous polymer film according to embodiments of the present disclosure.

Referring to FIG. 1, a polymer sheet containing oil is stretched to prepare a preliminary porous polymer film (S10).

In one embodiment, the polymer sheet may be manufactured using the following method.

A melt may be prepared by mixing oil and a polymer resin. The oil may block direct contact between the polymer surface and air, thereby preventing deterioration of the quality of the porous polymer film. The preliminary porous polymer film formed from the melt retains oil within its pores, thereby reducing its exposure to air

The polymer resin is not limited as long as it can be cured by electron beam irradiation as described below, and may include polyolefin resins such as polyethylene, polypropylene, and polymethylpentene; polyesters such as nylon and polyethylene terephthalate; polycarbonate; styrene resins; fluorine resins such as polytetrafluoroethylene and polyvinylidene fluoride; and vinyl chloride resins. These may be used alone or in combination with two or more thereof.

In one embodiment, the polymer resin may include at least one selected from the group consisting of polyethylene (PE), polypropylene (PP), polybutylene, polypentene, polymethylpentene, polyvinylidene fluoride (PVDF), polyvinylidene fluoride-hexafluoropropylene (PVDF-HFP), polyvinylidene fluoride-chlorotrifluoroethylene (PVDF-CTFE), polyvinylidene fluoride-ethylenetetrafluoroethylene (PVDF-ETFE), polyacrylonitrile (PAN), polyethylene terephthalate (PET), polybutylene terephthalate (PBT), polyethylene naphthalene (PEN), polyimide (PI), polyphenylene sulfide (PPS), polysulfone, polyethersulfone (PES), ethylene-vinyl acetate (EVA), and polycarbonate (PC).

The polymer resin may include a polymer having a weight-average molecular weight of $1 \times 10^5$ to $1 \times 10^6$ g/mol. For example, the polymer resin may include polyethylene having a weight-average molecular weight of $5 \times 10^5$ to $2 \times 10^6$ g/mol.

In one embodiment, the oil may include at least one selected from the group consisting of paraffin oil, mineral oil, wax, phthalic acid esters, aromatic ethers, palmitic acid, fatty acids having 10 to 20 carbon atoms, fatty alcohols having 10 to 20 carbon atoms, and fatty acid esters in which one or more fatty acids including saturated or unsaturated fatty acids having 4 to 26 carbon atoms are esterified with an alcohol having 1 to 10 carbon atoms and 1 to 8 hydroxyl groups.

In one embodiment, the kinematic viscosity of the oil at 40°C may be 80 to 150 cSt ($80 \times 10^{-6}$ to $150 \times 10^{-6}$ m$^2$/s).

In one embodiment, the kinematic viscosity of the oil at 40°C may be 90 cSt to 100 cSt ($90 \times 10^{-6}$ to $100 \times 10^{-6}$ m$^2$/s).

For example, the kinematic viscosity may be measured according to ASTM D445 or ISO 3104 standards. In addition, for example, the kinematic viscosity may be measured using a glass capillary viscometer by the capillary method, but is not limited thereto.

The melt may be prepared by mixing and kneading the polymer resin and the oil at a weight ratio of 2:8 to 5:5. For example, the melt may be prepared in a compounder, for example using a twin-screw compounder.

The melt may be extruded through a die to form a sheet. For example, the melt may be continuously extruded through a die to form a polymer sheet. Prior to stretching, the thickness of the extruded polymer sheet may be from 100 to 4000 $\mu$m, but is not limited thereto.

In one embodiment, the polymer sheet may include the oil in an amount of 60% by weight ("wt%") to 90 wt% based on the total weight thereof.

In one embodiment, the polymer sheet may include the oil in an amount of 65 wt% to 80 wt% based on the total weight thereof.

The polymer sheet may be stretched. The polymer sheet formed by extrusion may have a very close spacing between polymer chains and a high density. The stretching process may reduce the thickness and lower the density of the polymer film. Accordingly, a preliminary porous polymer film in which oil is contained within the pores of the resulting porous film may be provided.

The direction and ratio of the stretching may be controlled as needed. For example, the stretching may include a first stretching process in the longitudinal direction (MD) and a second stretching process in the transverse direction (TD), and vice versa, constituting biaxial stretching. The sequence of the stretching steps is not particularly limited and may be varied as required.

In one embodiment, the stretching ratio may be 4 to 400 times. For example, when performing biaxial stretching, stretching may be performed 2 to 20 times in the longitudinal direction and/or 2 to 20 times in the transverse direction.

In one embodiment, for uniaxial stretching, the stretching ratio may be 16 times or more, 20 times or more, 30 times or more, 50 times or more, or 60 times or more, and may be 350 times or less, 250 times or less, 200 times or less, 185 times or less, 150 times or less, or 100 times or less.

In one embodiment, for uniaxial stretching, the stretching ratio may be 16 to 400 times, or 16 to 185 times.

In one embodiment, for biaxial stretching, the stretching ratio may be 2 to 18 times, 2 to 15 times, 2 to 14 times, 4 to 14 times, or 4 to 10 times in the longitudinal direction, and 2 to 18 times, 2 to 15 times, 2 to 14 times, 4 to 14 times, or 4 to 10 times in the transverse direction.

In one embodiment, the longitudinal stretching ratio and the transverse stretching ratio may be the same or different.

In one embodiment, the stretching may be performed at a temperature of 100°C to 200°C, or 110°C to 130°C. Accordingly, the flexibility of the polymer film may be improved, allowing the stretching process to be performed more efficiently with a smaller force.

FIG. 2 is a schematic view illustrating a system for manufacturing a porous polymer film according to an embodiment.

The system for manufacturing a porous polymer film may include a stretching unit A1 configured to stretch a polymer sheet containing oil to prepare a preliminary porous polymer film; an electron beam irradiation unit A2 configured to irradiate the preliminary porous polymer film with electron beams to produce a crosslinked porous polymer film; an oil extraction unit A3 configured to extract oil from the crosslinked porous polymer film; and a heat-setting unit A4 configured to heat the crosslinked porous polymer film from which the oil has been extracted to fix its structure.

In other words, the stretching unit A1 may be configured to stretch a polymer sheet containing oil to prepare a preliminary porous polymer film. The electron beam irradiation unit A2 may be configured to irradiate the preliminary porous polymer film with electron beams to produce a crosslinked porous polymer film. The oil extraction unit A3 may be configured to extract oil from the crosslinked porous polymer film. The heat-setting unit A4 may be configured to heat the crosslinked porous polymer film from which oil has been extracted to fix its structure.

The system may further include a plurality of conveying units that sequentially connect the stretching unit, the electron beam irradiation unit, the oil extraction unit, and the heat-setting unit, wherein a conveying direction of the conveying units is a direction in which the film travels from the stretching unit to the heat-setting unit.

In some embodiments, the conveying units may convey each film in-line.

The conveying unit may include, for example, guide rollers, conveyor belts, and the like that move the film in the conveying direction.

Referring to FIG. 2, a polymer sheet may be stretched in the stretching unit A1. The stretching unit A1 may include a uniaxial or biaxial stretching device, and the stretching device may perform sequential or simultaneous stretching, for example, in a roll or tenter manner.

For example, a polymer sheet provided as a supply roll R1 may be stretched in the stretching unit A1. The stretching process may reduce the density of the polymer sheet.

The stretching unit A1 may, for example, stretch the polymer sheet in the machine direction (MD) and the transverse direction (TD), where the MD may be the same as the conveying direction.

FIG. 2 illustrates that the polymer sheet is provided as the supply roll R1. However, this is not limited thereto, and the polymer sheet may be continuously supplied to the stretching process after being formed.

The preliminary porous polymer film is irradiated with electron beams to produce a crosslinked porous polymer film (e.g., S20 in FIG. 1).

According to an embodiment, the preliminary porous polymer film may have a pore size of 100 nm or less, for example, 40 nm to 100 nm, 40 nm to 90 nm, 40 nm to 70 nm, or 40 nm to 60 nm. The pore size may refer to the average pore diameter.

As a non-limiting example, the pore size may be measured using a pore size analyzer according to the ASTM F316-03 standard. For example, a capillary flow porometer, a gas adsorption analyzer (BET, BJH, etc.), or a gas displacement pycnometer (e.g., helium pycnometer) may be used as the pore size analyzer.

The preliminary porous polymer film may include a structure in which linear polymer chains are entangled while remaining separated from each other, thereby forming pores between the chains. Oil may be impregnated within the pores to prevent the surfaces of the polymer chains from contacting air. The electron beam irradiation may crosslink and cure the linear polymer chains, thereby producing a crosslinked porous polymer film including a network of the bonded polymer chains. Here, the term "bonded" may refer to the presence of a covalent chemical bond that may interconnect two linear polymer chains with each other. The network of the bonded polymer chains may indicate a three-dimensional interconnected network structure having a plurality of covalent bonds between individual polymer chains, which may lead to increased heat resistance in terms of an enhanced mechanical stability at increased temperatures.

Referring again to FIG. 2, an electron beam irradiation device DB may irradiate electron beams in the electron beam irradiation unit A2. The preliminary porous polymer film may pass through the electron beam irradiation unit A2 while traveling and be continuously transferred to the oil extraction unit described below.

In one embodiment, the acceleration voltage of the electron beam may be 0.2 MeV to 2.5 MeV.

In one embodiment, the acceleration voltage of the electron beam may be 0.5 MeV to 1.5 MeV. The acceleration voltage of the electron beam may be controlled according to the type of polymer, the thickness of the preliminary porous polymer film, the energy required for curing, and the traveling speed.

In one embodiment, the preliminary porous polymer film may be irradiated with electron beams once or more to produce a crosslinked porous polymer film.

In one embodiment, the cumulative irradiation dose of the electron beam for the preliminary porous polymer film may be 25 kGy to 200 kGy.

According to an embodiment, the cumulative irradiation dose of the electron beam for the preliminary porous polymer film may preferably be 50 kGy to 200 kGy or, more preferably, 50 kGy to 150 kGy. The cumulative irradiation dose of the electron beam may be controlled according to the type of polymer, the thickness of the preliminary porous polymer film, the energy required for curing, and the traveling speed.

For example, the cumulative irradiation dose of the electron beam may be the average cumulative irradiation dose per unit area for the preliminary porous polymer film. For example, the cumulative irradiation dose may be calculated based on a single irradiation dose of the electron beam, the region of the film irradiated with the electron beam, the irradiation depth of the electron beam, and the number of passes. The electron beam irradiation process may be performed while the preliminary porous polymer film contains oil. This allows the crosslinking reaction to proceed without exposing the polymer chains to air, particularly oxygen. When irradiated with electron beams, highly reactive elements may form radicals or undergo side reactions due to the high thermal and electron beam energies. In particular, oxygen in the air may form radicals and degrade the quality of the polymer film. However, according to the present disclosure, by irradiating electron beams without the polymer chains coming into contact with oxygen, a polymer film with improved quality may be provided.

In one embodiment, a heat treatment may be further performed after the electron beam irradiation. Performing the heat treatment may further promote the reaction of residual radicals or highly reactive chemical species generated by the electron beam irradiation for the crosslinking reaction. Accordingly, the residual radicals may be prevented from reacting and degrading the quality of the porous polymer film during the oil extraction process described below.

In one embodiment, the heat treatment may be performed at a temperature of 50°C to 150°C for more than 1 minute and less than 20 minutes. Preferably, the heat treatment is performed at a temperature of 100 to 130°C for more than 1 minute and less than 10 minutes.

According to the manufacturing method, oil is extracted from the crosslinked porous polymer film (e.g., S30 in FIG. 1). After the electron beam crosslinking, the oil may be removed from the pores of the porous polymer film.

The oil extraction process may be performed using a conventional solvent extraction method, such as immersion, solvent spray, or ultrasonic treatment, alone or in combination with two or more of these methods, but is not particularly limited thereto.

The method for manufacturing a porous polymer film according to the present disclosure may further include heat treating the crosslinked porous polymer film after the electron beam irradiation step and before the oil extraction step.

Referring again to FIG. 2, the crosslinked porous polymer film transferred from the electron beam irradiation unit A2 may enter the oil extraction unit A3, and the oil may be removed in the oil extraction unit A3.

The oil may be extracted by treating the crosslinked porous polymer film with an organic solvent in the oil extraction unit A3.

The organic solvent may be methyl ethyl ketone, methylene chloride, or hexane, which each exhibit high extraction efficiency and rapid drying, but is not limited thereto.

At least 99 wt% of the oil contained in the crosslinked porous polymer film may be removed by extraction based on the total weight of the oil.

According to the manufacturing method, heat setting of the crosslinked porous polymer film is performed after oil extraction (e.g., S40 in FIG. 1). Heat setting may enhance the network strength of the crosslinked polymer chains at high temperatures to prevent the film's self-supporting capacity from deteriorating as oil is removed from the crosslinked polymer chains.

Referring again to FIG. 2, the porous polymer film transferred from the oil extraction unit A3 may enter the heat-setting unit A4 and be heat treated in the heat-setting unit A4 to manufacture the porous polymer film into a supply roll R2.

The heat setting may include, for example, thermal fixation, thermal relaxation, and the like. The residual stress of the porous polymer film may be reduced or eliminated by the heat setting.

In one embodiment, the heat setting may be performed at a temperature of 100°C to 200°C.

According to an embodiment, the heat setting may be performed at a temperature of 110°C to 130°C. The heat setting temperature may be controlled according to the type of polymer, the viscosity of the removed oil, the thickness of the film, and the traveling speed.

In one embodiment, the high load melt index (HLMI) of the porous polymer film manufactured by the method may be 0.5 g/10 min or less.

According to an embodiment, the HLMI of the porous polymer film manufactured by the method may be 0.1 g/10 min or less. Within this range, the mechanical properties of the porous polymer film at high temperatures may be improved.

For example, the HLMI may refer to the mass of the molten polymer (g/10 min) measured by preparing a specimen from the porous polymer film by cutting it, applying a load of 21.6 kg at 190°C, and extruding it for 10 minutes.

The HLMI may be expressed in units of g/10 min, and may refer to a value measured by placing 3 g of the porous polymer film in a perforated chamber at a temperature of 190°C, applying a load of 21.6 kg, and extruding the porous polymer film for 10 minutes.

For example, the HLMI may be measured according to ASTM D1238.

In one embodiment, the high-temperature strain increase rate (SR), as defined by Equation 1 below, of the porous polymer film manufactured by the method may be 6 or less.

[Equation 1]

$$\text{High-temperature strain increase rate (SR)} = \triangle\varepsilon \,/\, \triangle T$$

In Equation 1, $\triangle\varepsilon$ denotes the strain change in the temperature range of 155°C to 170°C in a temperature-strain graph obtained by measuring the strain of the porous polymer film while heating from room temperature at a heating rate of 5°C/min under a load of 0.02 N using a thermomechanical analysis (TMA) method, and $\triangle T$ denotes the temperature change.

In one embodiment, the high-temperature strain increase rate of the porous polymer film manufactured by the method may be 5 or less.

Within the above range, the mechanical properties of the porous polymer film at high temperatures may be improved. For example, the rate at which the mechanical properties of the porous polymer film deteriorate in the temperature range of approximately 155°C to 170°C may be reduced, thereby enabling the porous polymer film to be utilized even in extremely high-temperature environments.

The high-temperature strain increase rate may be the slope of a section in which strain increases linearly within a range of 155°C to 170°C in a temperature-strain graph in which the horizontal axis represents temperature in °C units and the vertical axis represents strain in % units, obtained by measuring the strain of the porous polymer film while increasing the temperature.

The thermomechanical analysis may be performed using, for example, a TMA 450 analyzer from TA Instruments.

In the thermomechanical analysis, strain may be measured, for example, in the MD or TD.

In the thermomechanical analysis, strain may be measured, for example, in the MD.

The porous polymer film may be utilized in various fields. For example, the porous polymer film may be used in the electrical and electronic field for purifying chemicals required for secondary battery separators and semiconductor processes; in the bio field for hemodialysis, artificial lung membranes, plasma purification membranes, and respirable medical clothing serving as artificial kidneys; in the water treatment field for isolating pathogenic bacteria in water and wastewater treatment plants and removing salt from seawater; and in the petrochemical field for purifying chemicals or organic solvents and separating gases from petrochemical processes.

In one embodiment of the present disclosure, a system for manufacturing a porous polymer film may be provided. As described above, the system for manufacturing a porous polymer film shown in FIG. 2 according to an embodiment of the present disclosure may be provided.

The system for manufacturing a porous polymer film may be a roll-to-roll system including a polymer sheet supply roll R1 and a porous polymer film supply roll R2.

In the traveling section between the polymer sheet supply roll R1 and the porous polymer film supply roll R2, the polymer sheet may travel from the polymer sheet supply roll R1 toward the porous polymer film supply roll R2 and pass sequentially through the stretching unit A1, the electron beam irradiation unit A2, the oil extraction unit A3, and the heat-setting unit A4.

In one embodiment, the system may further include an extrusion unit configured to prepare a polymer sheet by extruding a melt containing a polymer resin and oil. The extrusion unit may be disposed upstream of the stretching unit A1. The extrusion unit may include a die, such as a T-shaped die, for forming the polymer sheet by extruding the melt, and may further include a kneading device disposed at the front end of the die for kneading the polymer resin and oil, and a cooling device disposed at the rear end of the die for cooling the extruded polymer sheet. The cooling device may include, for example, a device for supplying a cooling gas or a cooling roller. The cooling gas may be, for example, air, nitrogen gas, helium gas, or the like, and may have a temperature of 0 to 80°C, but is not limited thereto.

The porous polymer film according to embodiments of the present disclosure may have a high load melt index (HLMI) of 0.5 g/10 min or less, as measured under conditions of a temperature of 190°C and a load of 21.6 kg according to ASTM D1238, and a high-temperature strain increase rate (SR) of 6 or less, as defined by Equation 1 below:

[Equation 1]

$$\text{High-temperature strain increase rate (SR)} = \triangle\varepsilon \, / \, \triangle\mathrm{T}$$

In Equation 1, $\triangle\varepsilon$(%) denotes the strain change in the temperature range of 155°C to 170°C in a temperature-strain graph obtained by measuring the strain of the porous polymer film while heating from room temperature at a heating rate of 5°C/min under a load of 0.02 N using a thermomechanical analysis (TMA) method, and $\triangle$T(°C) denotes the temperature change.

The porous polymer film may be manufactured by the above-described manufacturing method and/or manufacturing system.

The porous polymer film may be manufactured by curing a preliminary porous polymer film containing oil through electron beam irradiation and then extracting the oil. The porous polymer film may include a cured product crosslinked by the electron beam irradiation before the oil is extracted.

Since the electron beam irradiation process is performed while the preliminary porous polymer film contains oil, the porous polymer film may include a cured product in which the polymer chains are crosslinked without being exposed to air, particularly oxygen. When the electron beam is irradiated, highly reactive elements may form radicals or cause side reactions due to the high thermal and electron beam energy. In particular, oxygen in the air may form radicals and degrade the quality of the polymer film. However, according to the present disclosure, by irradiating electron beams without the polymer chains coming into contact with oxygen, a porous polymer film having improved quality may be provided.

Preferably, a porous polymer film may be provided that shows an increased gel content of 80% or more, more preferably of 90% or more, the gel content being determined as described below under section "(3) Gel content". An increased gel content indicates significantly improved (thermo-)mechanical properties of the porous polymer film, which may correlate with the crosslinking structure, density and other related factors such as the type of covalent bonds contained in the crosslinking structure.

In one embodiment, the porous polymer film may have a thickness of, for example, 5 $\mu$m to 100 $\mu$m. As a non-limiting example, the thickness of the porous polymer film may be measured using a TESA Mu-Hite Electronic Height Gauge (TESA) under a measurement pressure of 0.63 N.

Hereinafter, embodiments of the present invention will be further described with reference to specific experimental examples. The examples and comparative examples included in the experimental examples are merely illustrative of the present disclosure and do not limit the scope of the appended claims.

### Example 1

High-density polyethylene having a weight-average molecular weight of $6.0 \times 10^5$ and paraffin oil having a kinematic viscosity of 95 cSt ($95 \times 10^{-6}$ m²/s) at 40°C were mixed at a weight ratio of 30:70 and kneaded in a twin-screw compounder to prepare a melt. The melt was extruded through a T-shaped die to form a sheet, and then stretched at 115°C with a draw ratio of 36 ($6 \times 6$), i.e. a biaxial draw ratio of 6 in the MD direction and 6 in the TD direction. The stretched film was irradiated with electron beams (acceleration voltage: 1 MeV, irradiation dose: 100 kGy). The paraffin oil was extracted, and the film was heat-set at 120°C for 2 minutes to obtain a porous polymer film (thickness: 9 $\mu$m).

### Example 2

A porous polymer film (thickness: 9 $\mu$m) was manufactured in the same manner as in Example 1, except that the electron beam irradiation dose was changed to 50 kGy.

### Example 3

A porous polymer film (thickness: 9 $\mu$m) was manufactured in the same manner as in Example 1, except that the electron beam irradiation dose was changed to 150 kGy.

### Example 4

A porous polymer film (thickness: 9 $\mu$m) was manufactured in the same manner as in Example 1, except that a subsequent heat treatment (110°C for 2 minutes) was performed after electron beam irradiation.

**Comparative Example 1**

A porous polymer film (thickness: 9 μm) was manufactured in the same manner as in Example 1, except that the electron beam irradiation process and heat treatment were omitted.

**Comparative Example 2**

A porous polymer film (thickness: 9 μm) was manufactured in the same manner as in Example 1, except that paraffin oil was extracted from the stretched film, heat-set to prepare a porous film, and then the porous film was irradiated with electron beams (acceleration voltage: 1 MeV, irradiation dose: 100 kGy).

**Comparative Example 3**

A porous polymer film (thickness: 9 μm) was manufactured in the same manner as in Example 1, except that paraffin oil was extracted from the stretched film, irradiated with electron beams (acceleration voltage: 1 MeV, irradiation dose: 100 kGy), and then heat-set.

**Comparative Example 4**

A porous polymer film (thickness: 9 μm) was manufactured in the same manner as in Example 1, except that paraffin oil was extracted from the stretched film, heat-set to prepare a porous film, and then the porous film was irradiated with electron beams (acceleration voltage: 1 MeV, irradiation dose: 100 kGy). Subsequently, the film was heat-treated at 110°C for 2 minutes.

[TABLE 1]

| | Heat treatment | Electron beam irradiation | |
| --- | --- | --- | --- |
| | Timing of treatment | Timing of treatment | Cumulative irradiation dose (kGy) |
| Example 1 | - | After stretching and before oil extraction | 100 |
| Example 2 | - | After stretching and before oil extraction | 50 |
| Example 3 | - | After stretching and before oil extraction | 150 |
| Example 4 | After electron beam irradiation | After stretching and before oil extraction | 100 |
| Comparative Example 1 | | | |
| Comparative Example 2 | | After oil extraction and heat setting | 100 |
| Comparative Example 3 | | Before oil extraction and heat setting | 100 |
| Comparative Example 4 | After electron beam irradiation | After heat setting | 100 |

**Experimental Examples**

The porous polymer films of the Examples and Comparative Examples were evaluated for physical properties using the following methods, and the results are shown in Table 2.

(1) Thermomechanical characteristics

Using a TMA 450 device from TA Instruments, the strain of the porous polymer films of the Examples and Comparative Examples was measured by heating from 40°C to 200°C at a rate of 5°C/min under a preload of 0.02 N in temperature-ramp mode. A graph was obtained where the horizontal axis represents temperature in °C units and the vertical axis represents strain in %. From the graph, the slope of the section in which strain increases linearly within a range of 155°C to 170°C was measured as the high-temperature strain increase rate. The high-temperature strain increase rate was calculated according to Equation 1 described above, and the resulting value was used as the thermomechanical characteristic for evaluation.

(2) HLMI

3 g of the porous polymer films of the Examples and Comparative Examples were placed in a perforated chamber at a temperature of 190°C, a load of 21.6 kg was applied, and the mass of the molten porous polymer film extruded over 10 minutes was measured to determine the high load melt index (HLMI) according to ASTM D1238. At this time, the diameter and length of the holes were formed to be $2.095 \pm 0.005$ mm and $8.000 \pm 0.025$ mm, respectively, the same as those of a standard die (orifice).

(3) Gel content

3 g of the porous polymer films of the Examples and Comparative Examples were immersed in xylene at 135°C for 3 hours. The mass of the undissolved residual solid was calculated as a percentage of the initial input mass (3 g) and designated as the gel content. An isomer mixture of xylene was used for the immersion; however, the present application is not limited thereto, and individual xylene isomers such as o-xylene, m-xylene, or p-xylene may be used.

[TABLE 2]

|  | HLMI (g/10 min) | Thermomechanical characteristics, SR (%/°C) | Gel content (%) |
|---|---|---|---|
| Example 1 | <0.01 | 5 | 95 |
| Example 2 | 0.01 | 6 | 92 |
| Example 3 | <0.01 | 4 | 95 |
| Example 4 | <0.01 | 1 | 100 |
| Comparative Example 1 | 0.6 | 10 | 40 |
| Comparative Example 2 | 7 | 12 | 2 |
| Comparative Example 3 | 1 | 7 | 25 |
| Comparative Example 4 | 1 | 7 | 25 |

Referring to Table 2 above, the porous polymer films of the Examples may provide enhanced mechanical properties at high temperatures and exhibit gel contents of 92% or more.

Conversely, the mechanical properties of the porous polymer films of the Comparative Examples were significantly degraded at high temperatures, and the gel content decreased to 40% or even less.

**Claims**

1. A method for manufacturing a porous polymer film, comprising:

   stretching a polymer sheet containing oil to prepare a preliminary porous polymer film;
   irradiating the preliminary porous polymer film with electron beams to produce a crosslinked porous polymer film;
   extracting oil from the crosslinked porous polymer film; and
   heat setting the crosslinked porous polymer film.

2. The method for manufacturing a porous polymer film according to claim 1, wherein the acceleration voltage of the electron beam is 0.2 MeV to 2.5 MeV.

3. The method for manufacturing a porous polymer film according to claim 1 or 2, wherein the cumulative irradiation dose of the electron beam for the preliminary porous polymer film is 25 kGy to 200 kGy, preferably is 50 kGy to 200 kGy, more preferably is 50 kGy to 150 kGy.

4. The method for manufacturing a porous polymer film according to any one of claims 1 to 3, wherein the polymer sheet is manufactured by mixing the oil and the polymer resin to prepare a melt, and extruding the melt into a sheet shape.

5. The method for manufacturing a porous polymer film according to any one of claims 1 to 4, wherein the polymer sheet contains the oil in an amount of 60% by weight to 90% by weight based on the total weight thereof.

6. The method for manufacturing a porous polymer film according to any one of claims 1 to 5, wherein the stretching is performed at a temperature of 100°C to 200°C and at a draw ratio of 4 to 400 times.

7. The method for manufacturing a porous polymer film according to any one of claims 1 to 6, wherein the heat setting is performed at a temperature of 100°C to 200°C, preferably at a temperature of 110°C to 130°C.

8. The method for manufacturing a porous polymer film according to any one of claims 1 to 7, further comprising heat treating the crosslinked porous polymer film after the electron beam irradiation step and before the oil extraction step.

9. The method for manufacturing a porous polymer film according to claim 8, wherein the heat treatment is performed at a temperature of 50°C to 150°C for more than 1 minute and less than 10 minutes.

10. A system for manufacturing a porous polymer film, the system comprising:

   a stretching unit (A1) configured to stretch a polymer sheet containing oil to prepare a preliminary porous polymer film;
   an electron beam irradiation unit (A2) configured to irradiate the preliminary porous polymer film with electron beams to produce a crosslinked porous polymer film;
   an oil extraction unit (A3) configured to extract oil from the crosslinked porous polymer film; and
   a heat-setting unit (A4) configured to heat the crosslinked porous polymer film from which the oil has been extracted to fix its structure,
   wherein the system further comprises a plurality of conveying units sequentially connecting the stretching unit (A1), the electron beam irradiation unit (A2), the oil extraction unit (A3), and the heat-setting unit (A4), and
   wherein a conveying direction of the conveying units is a direction in which the film travels from the stretching unit (A1) to the heat-setting unit (A4).

11. The system for manufacturing a porous polymer film according to claim 10, further comprising an extrusion unit configured to extrude a melt containing a polymer resin and oil to prepare a polymer sheet, and
   the extrusion unit is disposed upstream of the stretching unit (A1).

12. A porous polymer film having a high load melt index (HLMI) of 0.5 g/10 min or less, as measured under conditions of a temperature of 190°C and a load of 21.6 kg according to ASTM D1238, and having a high-temperature strain increase rate (SR) of 6 or less, as defined by Equation 1 below:

[Equation 1]

$$\text{High-temperature strain increase rate (SR)} = \triangle\varepsilon \, / \, \triangle T$$

in Equation 1, $\triangle\varepsilon$ denotes the strain change in the temperature range of 155°C to 170°C in a temperature-strain graph obtained by measuring the strain of the porous polymer film while heating from room temperature at a heating rate of 5°C/min under a load of 0.02 N using a thermomechanical analysis (TMA) method, and $\triangle T$ denotes the temperature change.

13. The porous polymer film according to claim 12, comprising one or more selected from the group of polyethylene, polypropylene, polymethylpentene, polyesters, polycarbonate, styrene resins, fluorine resins, and vinyl chloride resins, wherein at least a part of the porous polymer film is provided as a cured product crosslinked by an electron beam irradiation,
   optionally wherein a gel content of the porous polymer film is 90% or more.

14. Use of electron beam irradiation for curing and crosslinking a preliminary porous polymer film that contains an oil.

15. Use of a porous polymer film according to claim 12 or 13 for purifying chemicals used for secondary battery separators and semiconductor processes, for hemodialysis, artificial lung membranes, plasma purification membranes, and respirable medical clothing serving as artificial kidneys, for isolating pathogenic bacteria in water and wastewater treatment plants and removing salt from seawater, and/or for purifying chemicals or organic solvents and separating gases from petrochemical processes.

[FIG. 1]

| | |
|---|---|
| Stretching of polymer sheet to prepare a preliminary porous polymer film | ~S10 |
| Irradiating the preliminary porous polymer film with electron beams to prepare a crosslinked porous polymer film | ~S20 |
| Extracting oil from the crosslinked porous polymer film | ~S30 |
| Heat-setting the crosslinked porous polymer film | ~S40 |

[FIG. 2]

# EUROPEAN SEARCH REPORT

**Application Number**

EP 25 22 4659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 857 156 B1 (LG CHEMICAL LTD [KR]) 11 May 2018 (2018-05-11) * paragraphs [0013], [0064] - [0066], [0087] - [0090] * ----- | 1-15 | INV.<br>B29C55/00<br><br>ADD.<br>B29C55/12 |
| X | EP 2 928 958 B1 (EXXONMOBIL CHEM PATENTS INC [US]; EXXONMOBIL CHEMICAL PATENTS INC [US]) 21 August 2019 (2019-08-21) * paragraphs [0013], [0113] * ----- | 12,13,15 | |
| A | CA 2 625 452 A1 (TONEN SEKIYUKAGAKU KK [JP]) 26 April 2007 (2007-04-26) * the whole document * ----- | 1-15 | |

**TECHNICAL FIELDS SEARCHED (IPC)**

B29C

The present search report has been drawn up for all claims

| Place of search | Date of completion of the search | Examiner |
|---|---|---|
| Munich | 11 June 2026 | Schneider, Dominik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 4659

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2026

| Patent document cited in search report | | Publication date | Patent family member(s) | | Publication date |
|---|---|---|---|---|---|
| KR 101857156 | B1 | 11-05-2018 | KR 20160052332 A | | 12-05-2016 |
| | | | KR 20180033487 A | | 03-04-2018 |
| EP 2928958 | B1 | 21-08-2019 | CN 104812828 A | | 29-07-2015 |
| | | | EP 2928958 A1 | | 14-10-2015 |
| | | | WO 2014088827 A1 | | 12-06-2014 |
| CA 2625452 | A1 | 26-04-2007 | CA 2625452 A1 | | 26-04-2007 |
| | | | CN 101291794 A | | 22-10-2008 |
| | | | EP 1946905 A1 | | 23-07-2008 |
| | | | JP WO2007046473 A1 | | 23-04-2009 |
| | | | KR 20080064163 A | | 08-07-2008 |
| | | | PL 1946905 T3 | | 28-04-2017 |
| | | | TW I406891 B | | 01-09-2013 |
| | | | US 2009134538 A1 | | 28-05-2009 |
| | | | WO 2007046473 A1 | | 26-04-2007 |

EPO FORM P0459

For more details about this annex : see Official Journal of the European Patent Office, No. 12/82